# EUROPEAN PATENT SPECIFICATION

(11) **EP 1 348 841 B1**
(45) Date of publication and mention of the grant of the patent: **30.04.2008**
(21) Application number: 03007017.1
(22) Date of filing: 27.03.2003
(51) Int. Cl.: F01N 3/28, B01D 53/88, C04B 35/622, B32B 18/00, D04H 1/42

(54) **Holding material for catalytic converter and method for producing the same**
Halterungsmaterial für einen katalytischen Umwandler und Verfahren zu seiner Herstellung
Matière de retenue pour convertisseur catalytique et procédé pour sa fabrication

(30) Priority: 28.03.2002 JP 2002092100; 29.03.2002 JP 2002095939
(43) Date of publication of application: 01.10.2003
(73) Proprietor: NICHIAS CORPORATION, Tokyo (JP)
(72) Inventor: Anji, Toshiyuki, Nichias Corporation, Tokyo (JP); Tanaka, Masafumi, Nichias Corporation, Tokyo (JP); Sakane, Tadashi, Nichias Corporation, Hamamatsu, Hamamatsu-shi, Shizuoka (JP); Mochida, Takahito, Nichias Corporation, Hamamatsu, Hamamatsu-shi, Shizuoka (JP)
(74) Representative: Grünecker, Kinkeldey, Stockmair & Schwanhäusser Anwaltssozietät

(56) References cited:
- EP-A- 0 396 331
- EP-A- 1 134 479
- WO-A-03/000414

## Description

### Background of the Invention

### Field of the Invention

The present invention relates to a holding material for a catalytic converter, for example, for purging exhaust gas emitted from an automobile, and a method for producing the holding material for the catalytic converter.

### Description of the Related Art

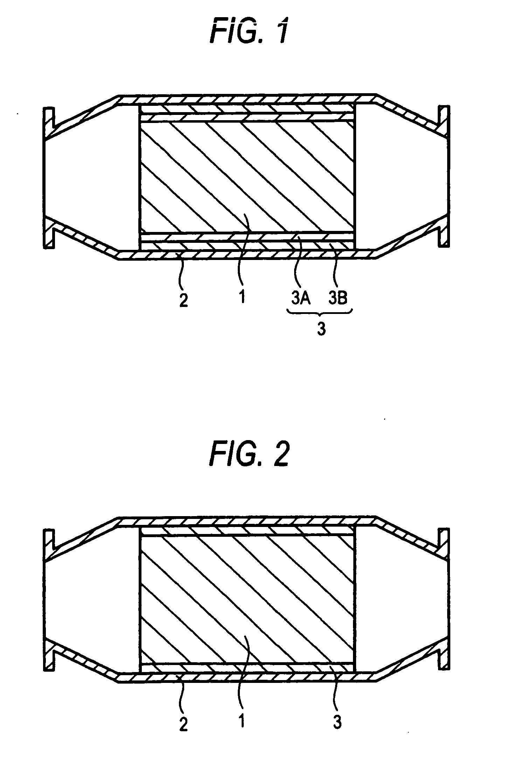

As known commonly, a catalytic converter for purging exhaust gas is mounted in a vehicle such as an automobile in order to remove detrimental components such as carbon monoxide, hydrocarbon, and nitrogen oxides from exhaust gas emitted from an engine of the vehicle. Generally, as shown in Fig. 2 which is a sectional view, the catalytic converter has a catalyst carrier 1 shaped like a cylinder, a metal casing 2 for receiving the catalyst carrier 1, and a holding material 3 interposed in a gap between the catalyst carrier 1 and the casing 2 while mounted on the catalyst carrier 1.

Generally, the catalyst carrier 1 has a cylindrical honey-comb molded material, for example, made of cordierite, and a precious metal catalyst carried by the molded material. It is therefore necessary that the holding material 3 interposed in a gap between the catalyst carrier 1 and the casing 2 has a function for holding the catalyst carrier 1 safely to prevent the catalyst carrier 1 from being damaged by collision with the casing 2 due to vibration or the like during the running of the automobile, and a function for sealing the catalyst carrier 1 to prevent non-purged exhaust gas from leaking out through the gap between the catalyst carrier 1 and the casing 2. Therefore, the holding material heretofore mainly used is a holding material formed by collection of alumina fiber, mullite fiber or other ceramic fiber into a mat shape having a predetermined thickness or a holding material molded into a cylindrical shape from the mat-like holding material.

Recently, with the movement toward more rigid regulation of exhaust gas, there is a tendency for exhaust gas to be heated at a high temperature in order to increase efficiency of removing detrimental components from the exhaust gas. The ceramic fiber mat however has a problem that the ceramic fiber mat cannot be used at a temperature of not lower than 600°C. This is because when the ceramic fiber mat is heated while compressed, the ceramic fiber mat gets into a so-called heat set state in which the thickness of the ceramic fiber mat cannot be restored to its original thickness even if the ceramic fiber mat is released from the pressure. In addition, when an inorganic expanding material such as vermiculite is added to the ceramic fiber mat to form a so-called thermal expansion mat, heat resistance can be improved but the temperature is still limited to 700-800°C.

The alumina fiber mat has an advantage in that the alumina fiber mat has heat resistance to endure a high temperature of about 1,000°C and is low in decreasing rate of elastic recovery with the elapsed time. On the other hand, the alumina fiber mat has a disadvantage in that surface pressure is slightly reduced in comparison with other fiber mats in equal density. Accordingly, the cost increases because it is necessary to increase the density in order to increase the surface pressure.

The mullite fiber mat has an advantage in that high surface pressure can be obtained in comparison with other inorganic fiber mats in equal density. On the other hand, the mullite fiber mat however has a disadvantage in that the mullite fiber mat deteriorates with the elapsed time because the decreasing rate of elastic recovery is high when heat stress is repeatedly applied on the mullite fiber mat.

As described above, a holding material which has high surface pressure so that the catalyst carrier 1 can be held well, which has high sealing performance and which little deteriorates with the elapsed time has not been obtained yet in the related art. The present situation is that no measure can be taken in the related art against rising of the temperature in use of the catalytic converter.

WO-A-03/000414 (prior art in accordance with Article 54(3) EPC) discloses a holding material which serves to hold a catalyst carrier, said catalyst carrier holding material comprising inorganic fibers comprising alumina and silica, and the mullite ratio of the inorganic fibers is in the range of more than 30% and less than 75%. According to a preferred embodiment the mixing proportion of alumina to silica ranges from 50:50 to 80:20. The thickness (mean diameter) of the inorganic fibers ranges from 2 to 7 µm, and the length of the fibers ranges from 0.5 to 50 mm. According to another preferred embodiment, the catalyst carrier holding material can be a blend of fibers containing less than 10% mullite and fibers containing more than 70% mullite. The catalyst carrier holding material may be constructed of a single member or it may be constructed of two or more members in a laminated or bonded fashion.

Figure 1 of EP-A-0396331 shows a catalytic converter for purifying exhaust gases, said converter comprising, in the following sequence, an inner ceramic monolith (18), a ceramic fiber layer (26), an intumescent layer (22), a reinforcing layer (24), said layers (22) and (24) forming an intumescent material (20), and an outer housing (12). The ceramic fibers of the ceramic fiber layer (26) may be alumosilicate glass fibers having an alumina/silica ratio of about 50:50, mullite ceramic fibers or alumina ceramic fibers. The intumescent layer (22) contains vermiculite, hydrobiotite, or water-swelling tetrasilicic fluorine mica. The reinforcing layer (24) may be an inorganic fiber fabric but is preferably a polypropylene film.

EP-A-1134479 discloses a burn through resistant fire barrier for use in a thermal and/or acoustical insulation blanket system, said burn through resistant fire barrier comprising a burn through resistant nonwoven mat which may comprise alumosilicate fibers and/or alumina fibers, but preferably contains biocompatible (biosoluble) glass fibers.

### Summary of the Invention

An object of the present invention is to provide a catalytic converter holding material in which more excellent catalyst carrier holding performance and exhaust gas sealing performance can be kept for a long term even at a high temperature.

The present invention provides a holding material for a catalytic converter interposed in a gap between a catalyst carrier and a metal casing receiving the catalyst carrier, said holding material including alumina fiber and mullite fiber, wherein the alumina fiber and the mullite fiber are molded to form the holding material having a predetermined thickness, and wherein the alumina fiber contains 90% by weight or more of Al₂O₃ and SiO₂ as a residual component, and the mullite fiber has a mullite composition having a Al₂O₃/SiO₂ weight ratio of from 72/28 to 80/20, wherein a first portion of the holding material is an alumina fiber mat including alumina fiber and having a first thickness, wherein a second portion of the holding material is a mullite fiber mat including mullite fiber and having a second thickness, and wherein the alumina fiber mat is disposed on the mullite fiber mat to form a laminate and disposed on the side where the alumina fiber mat comes into contact with the catalyst carrier.

The present invention further provides a method of producing a holding material for a catalytic converter interposed in a gap between a catalyst carrier and a metal casing receiving the catalyst carrier,
said method comprising the steps of:
preparing a first slurry including alunima fiber and a first organic binder;
preparing a second slurry containing mullite fiber and a second organic binder;
molding the first slurry by suction dehydration;
drying the first slurry to obtain an alumina fiber mat after molding the first slurry;
applying the second slurry on a surface of the alumina fiber mat after drying the first slurry;
molding the second slurry by suction dehydration to obtain a laminate of the alumina fiber mat and a mullite fiber mat;
drying the laminate.

In the holding material according to the invention, because the aluminum fiber mat excellent in heat resistance is disposed on a high-temperature side to come into contact with the catalyst carrier, the deterioration of the mullite fiber mat with the elapsed time can be suppressed so that high surface pressure due to the mullite fiber mat can be kept for a long term.

The above-mentioned "mat" and "mixture of fiber collected into a mat shape" may be used in a shape of cylinder. Further, the word "mat" may be used to refer to a holding material after shaped like a cylinder.

### Brief Description of the Drawings

Fig. 1 is a sectional view schematically showing a catalytic converter provided with a holding material according to the invention.
Fig. 2 is a sectional view schematically showing a prior art catalytic converter provided with a holding material.

### Detailed Description of the Preferred Embodiments

A holding material according to the present invention will be described below in detail.

Fig. 1 is a sectional view schematically showing a catalytic converter provided with a holding material of the invention. Like the related-art catalytic converter shown in Fig. 2, the catalytic converter as shown in Fig. 1 has a catalyst carrier 1 shaped like a cylinder, a metal casing 2 for receiving the catalyst carrier 1, and a holding material 3 interposed between a gap between the catalyst carrier 1 and the casing 2 while mounted on the catalyst carrier 1. The holding material 3 according to the invention is constituted by a laminate of an alumina fiber mat 3A and a mullite fiber mat 3B.

The laminate of the alumina fiber mat 3A and the mullite fiber mat 3B can be shaped like a flat sheet. To hold the catalyst carrier 1, the laminate needs to be wound on the catalyst carrier 1 so that the alumina fiber mat 3A comes into contact with the catalyst carrier 1. The laminate may be shaped like a cylinder so that the alumina fiber mat 3A is located on the inner side while the mullite fiber mat 3B is located on the outer side. The holding material 3 shaped like a cylinder can be directly mounted on the catalyst carrier 1 to facilitate production of the catalytic converter.

Mats suitably selected from known mats heretofore used in a holding material can be used as the alumina fiber mat 3A and the mullite fiber mat 3B.

The mat used as the alumina fiber mat 3A is a mat made of alumina fiber containing 90 % by weight or more of Al₂O₃ (and SiO₂ as a residual component) and having low crystallinity in terms of X-ray crystallography. Generally, the fiber size of the alumina fiber is preferably selected to be in a range of 3 µm to 7 µm, and the fiber length of the alumina fiber is preferably selected to be in a range of from 0.05 mm to 5 mm.

The mat used as the mullite fiber mat 3B is a mat made of mullite fiber having a mullite composition having an Al₂O₃/SiO₂ weight ratio of 72/28 to 80/20 and having low crystallinity in terms of X-ray crystallography. Generally, the fiber size of the mullite fiber is preferably selected to be in a range of 3 µm to 7 µm, and the fiber length of the mullite fiber is preferably selected to be in a range of from 0.05 mm to 5 mm.

A method for obtaining the laminate of the alumina fiber mat 3A and the mullite fiber mat 3B is not limited but, for example, the laminate can be obtained by the following method. That is, a slurry containing alumina fiber and an organic binder and a slurry containing mullite fiber and an organic binder are prepared respectively in advance. First, the alumina fiber-containing slurry is molded by suction dehydration and dried to obtain an alumina fiber mat 3A. Then, the mullite fiber-containing slurry is applied on one surface of the alumina fiber mat 3A, molded by suction dehydration and dried to obtain a laminate of the alumina fiber mat 3A and a mullite fiber mat 3B. The thus obtained laminate is compressed into a predetermined thickness. Thus, the holding material according to the invention is accomplished.

The holding material can be shaped like a cylinder as follows. First, a cylindrical mesh member (e.g., a cylindrical metal net) is used so that the cylindrical mesh member is immersed in the alumina fiber-containing slurry. The mesh member taken out is directly subjected to dehydration molding. The molded product is dried to produce a cylindrical alumina fiber mat 3A. Then, the mullite fiber-containing slurry is applied on an outer surface of the cylindrical alumina fiber mat 3A, molded by suction dehydration and dried. Finally, when the cylinder mesh member is removed, a cylindrical laminate of the alumina fiber mat 3A located on the inner side and a mullite fiber mat 3B located on the outer side is obtained. The thus obtained laminate is compressed into a predetermined thickness. Thus, the cylindrical holding material is obtained.

In the invention, the density of the alumina fiber mat 3A, the density of the mullite fiber mat 3B, the thickness ratio between the alumina fiber mat 3A and the mullite fiber mat 3B and the total thickness of the holding material 3 can be determined suitably in accordance with the size, service temperature, etc. of the catalytic converter to which the holding material 3 is applied. Generally, the density of the alumina fiber mat 3A and the density of the mullite fiber mat 3B are both selected to be in a range of from 200 g/m² to 500 g/m². In the invention, this density range can be used. To have heat resistance due to the alumina fiber mat 3A and high surface pressure due to the mutllite fiber mat 3B in good balance, it is preferable that the thickness of the alumina fiber mat 3A is selected to be in a range of from 10 % to 50 % of the total thickness of the holding material 3 and the thickness of the mullite fiber mat 3B is selected to be in a range of from 50 % to 90 % of the total thickness of the holding material 3, when the density of the alumina fiber mat 3A and the density of the mullite fiber mat 3B are both in the aforementioned density range.

### Examples

The invention will be described below more specifically in connection with the following Example and Comparative Examples.

### (Example 1)

Into water, 97 parts by weight of alumina fiber of low crystallinity containing 96 % by weight of Al₂O₃ (and SiO₂ as a residual component) and having a fiber size of about 4 µm and a fiber length of about 3 mm, and 5 parts by weight of an organic binder (acrylic emulsion) were dispersed to prepare an alumina fiber-containing aqueous slurry. On the other hand, 97 parts by weight of mullite fiber of low crystallinity containing 80 % by weight of Al₂O₃ (and SiO₂ as a residual component) and having a fiber size of about 4 µm and a fiber length of about 3 mm, and 3 parts by weight of an organic binder (acrylic emulsion) were dispersed into water to prepare a mullite fiber-containing aqueous slurry.

First, the alumina fiber-containing aqueous slurry was molded by suction dehydration and dried to produce an alumina fiber mat having grammage (areal density) of 400 g/m². Then, the mullite fiber-containing aqueous slurry was applied on one surface of the alumina fiber mat, molded by suction dehydration and dried to thereby laminate a mullite fiber mat having grammage (areal density) of 600 g/m² on the alumina fiber mat. The thus obtained laminate of the alumina fiber mat and the mullite fiber mat was compressed to obtain a sheet-like holding material having a thickness of 7.5 mm and grammage (areal density) of 1,000 g/m².

Incidentally, the thickness ratio of the alumina fiber mat to the mullite fiber mat in the obtained sheet-like holding material was 33% (alumina fiber mat) to 67 % (mullite fiber mat). The sheet-like holding material was compressed up to a thickness of 4 mm at a speed of 1 mm/min by a universal testing machine. Surface pressure in this condition was 90 kPa. Room temperature elastic recovery of the sheet-like holding material as a whole was 75 %.

### (Comparative Example 1)

The alumina fiber-containing aqueous slurry used in Example 1 was used so that the slurry was molded by suction dehydration, dried and compressed to produce a sheet-like holding material having a thickness of 7.5 mm. The sheet-like holding material was compressed up to a thickness of 4 mm at a speed of 1 mm/min by the universal testing machine. Surface pressure in this condition was 70 kPa. Room temperature elastic recovery of the sheet-like holding material as a whole was 70 %.

### (Comparative Example 2)

The mullite fiber-containing aqueous slurry used in Example 1 was used so that the slurry was molded by suction dehydration, dried and compressed to produce a sheet-like holding material having a thickness of 7.5 mm. The sheet-like holding material was compressed up to a thickness of 4 mm at a speed of 1 mm/min by the universal testing machine. Surface pressure in this condition was 100 kPa. Ordinary temperature elastic recovery of the sheet-like holding material as a whole was 80 %.

### (Heat Resistance and Sealability Evaluation Test)

The sheet-like holding material obtained in Example 1 was wound on a cordierite catalyst carrier of a cylindrical honey-comb structure having an outer diameter of 100 mm and a length of 100 mm, so that the alumina fiber mat came into contact with the catalyst carrier. Then, the resulting product was mounted in a stainless steel casing having an inner diameter of 108 mm and a length of 120 mm to produce a catalytic converter. For the sake of comparison, the holding materials obtained in Comparative Examples 1 and 2 were used to produce catalytic converters in the same manner as described above.

Each of the produced catalytic converters was connected to an exhaust pipe of a gasoline engine. Exhaust gas was passed through the catalytic converter continuously for 24 hours. Gas emitted from the catalytic converter during the passage of the exhaust gas was analyzed to examine whether exhaust gas leaked from the holding material or not. After the passage of the exhaust gas was completed, the sheet-like holding material was taken out of each of the catalytic converters. Then, the elastic recovery of the sheet-like holding material was measured, so that the decreasing rate of elastic recovery from the initial elastic recovery was calculated. The holding material was further compressed up to a thickness of 4 mm at a speed of 1 mm/min by the universal testing machine so that surface pressure in this condition was measured. Leakage of exhaust gas from the holding material, the decreasing rate of elastic recovery and surface pressure were as shown in Table 1.

**TABLE 1**

| | Example 1 | Comparative Example 1 | Comparative Example 2 |
|---|---|---|---|
| Leakage of Exhaust Gas | Absent | Present | Present |
| Room Temperature Elastic Recovery (%) | 75 | 70 | 80 |
| Room Temperature Elastic Recovery (%) after Heating | 60 | 55 | 48 |
| Decreasing Rate (%) of Elastic Recovery | 80 | 79 | 60 |
| Surface Pressure (kPa) at Ordinary State | 90 | 70 | 100 |
| Surface Pressure (kPa) after Test | 80 | 63 | 50 |

It was confirmed from Table 1 that the holding material constituted by a laminate of an alumina fiber mat and a mullite fiber mat in Example 1 was lower in the decreasing rate of elastic recovery than the holding material constituted by only the alumina fiber mat (Comparative Example 1) or only the mullite fiber mat (Comparative Example 2), that is, the holding material obtained in Example 1 was excellent in sealing performance.

As described above, in the holding material according to the invention, both excellent catalyst carrier holding performance and excellent exhaust gas sealing performance can be kept even under a high temperature, so that improvement in heat resistance of the catalytic converter and elongation of the life of the catalytic converter can be attained. In addition, the filling density of the holding material can be reduced to produce high surface pressure, so that the holding material is excellent in cost performance.

Further, in the holding material according to the invention, both excellent catalyst carrier holding performance and excellent exhaust gas sealing performance can be kept even under a high temperature, so that improvement in heat resistance of the catalytic converter and elongation of the life of the catalytic converter can be attained.

## Claims

1. A holding material (3) for a catalytic converter interposed in a gap between a catalyst carrier (1) and a metal casing (2) receiving the catalyst carrier (1), said holding material (3) including alumina fiber and mullite fiber, wherein the alumina fiber and the mullite fiber are molded to form the holding material (3) having a predetermined thickness, and wherein the alumina fiber contains 90% by weight or more of Al₂O₃ and SiO₂ as a residual component, and the mullite fiber has a mullite composition having a Al₂O₃/SiO₂ weight ratio of 72/28 to 80/20, **characterised in that** a first portion of the holding material is an alumina fiber mat (3A) including alumina fiber and having a first thickness, wherein a second portion of the holding material is a mullite fiber mat (3B) including mullite fiber and having a second thickness, and wherein the alumina fiber mat (3A) is disposed on the mullite fiber mat (3B) to form a laminate and the alumina fiber mat (3A) disposed on the side where it comes into contact with the catalyst carrier (1).

2. A method of producing a holding material (3) for a catalytic converter interposed in a gap between a catalyst carrier (1) and a metal casing (2) receiving the catalyst carrier (1),
said method comprising the steps of:
preparing a first slurry including alumina fiber and a first organic binder;
preparing a second slurry containing mullite fiber and a second organic binder;
molding the first slurry by suction dehydration;
drying the first slurry to obtain an alumina fiber mat (3A) after molding the first slurry;
applying the second slurry on a surface of the alumina fiber mat (3A) after drying the first slurry;
molding the second slurry by suction dehydration to obtain a laminate of the alumina fiber mat (3A) and a mullite fiber mat (3B);
drying the laminate.

## Patentansprüche

1. Haltematerial (3) für einen Katalysator, das in einem Zwischenraum zwischen einem Katalysatorträger (1) und einem Metallgehäuse (2) angeordnet ist, das den Katalysatorträger (1) aufnimmt, wobei das Haltematerial (3) Aluminiumoxid-Faser und Mullit-Faser enthält, die Aluminiumoxid-Faser und die Mullit-Faser geformt werden, um das Haltematerial (3) mit einer vorgegebenen Dicke auszubilden, die Aluminiumoxid-Faser 90 Gew.-% oder mehr Al₂O₃ und SiO₂ als Restbestandteil enthält und die Mullit-Faser eine Mullit-Zusammensetzung mit einem Al₂O₃/SiO₂-Gewichtsverhältnis zwischen 72/28 und 80/20 hat, **dadurch gekennzeichnet, dass** ein erster Teil des Haltematerials eine Matte (3A) aus Aluminiumoxid-Faser ist, die Aluminiumoxid-Faser enthält und eine erste Dicke hat, ein zweiter Teil des Haltematerials eine Matte (3B) aus Mullit-Faser ist, die Mullit-Faser enthält und eine zweite Dicke hat, wobei die Matte (3A) aus Aluminiumoxid-Faser an der Matte (3B) aus Mullit-Faser so angeordnet ist, dass ein Laminat entsteht, und die Matte (3A) aus Aluminiumoxid-Faser an der Seite angeordnet ist, an der sie mit dem Katalysatorträger (1) in Kontakt kommt.

2. Verfahren zum Herstellen eines Haltematerials (3) für einen Katalysator, das in einem Zwischenraum zwischen einem Katalysatorträger (1) und einem Metallgehäuse (2) angeordnet ist, das den Katalysatorträger (1) aufnimmt,
wobei das Verfahren die folgenden Schritte umfasst:
Erzeugen einer ersten Aufschlämmung, die Aluminiumoxid-Faser und ein erstes organisches Bindemittel enthält;
Erzeugen einer zweiten Aufschlämmung, die Mullit-Faser und ein zweites organisches Bindemittel enthält;
Formen der ersten Aufschlämmung durch Absaug-Entwässerung (suction dehydration);
Trocknen der ersten Aufschlämmung, um eine Matte (3A) aus Aluminiumoxid-Faser nach Formen der ersten Aufschlämmung zu gewinnen;
Auftragen der zweiten Aufschlämmung auf eine Oberfläche der Matte (3A) aus Aluminiumoxid-Faser nach Trocknen der ersten Aufschlämmung;
Formen der zweiten Aufschlämmung durch Absaug-Entwässerung, um ein Laminat aus der Matte (3A) aus Aluminiumoxid-Faser und einer Matte (3B) aus Mullit-Faser zu gewinnen;
Trocknen des Laminats.

## Revendications

1. Matériau de maintien (3) pour un convertisseur catalytique disposé dans un intervalle entre un support de catalyseur (1) et un boîtier métallique (2) recevant le support de catalyseur (1), ledit matériau de maintien (3) incluant une fibre d'alumine et une fibre de mullite, où la fibre d'alumine et la fibre de mullite sont moulées pour former le matériau de maintien (3) ayant une épaisseur prédéterminée, et où la fibre d'alumine contient 90 % en masse ou plus de Al₂O₃ et SiO₂ comme composant résiduel, et la fibre de mullite a une composition de mullite ayant un rapport massique Al₂O_{3/}SiO₂ de 72/28 à 80/20, **caractérisé en ce qu'**une première partie du matériau de maintien est un matelas de fibre d'alumine (3A) incluant une fibre d'alumine et ayant une première épaisseur, où une seconde partie du matériau de maintien est un matelas de fibre de mullite (3B) incluant une fibre de mullite et ayant une seconde épaisseur, et où le matelas de fibre d'alumine (3A) est disposé sur le matelas de fibre de mullite (3B) pour former un stratifié et le matelas de fibre d'alumine (3A) est disposé sur le côté où il vient en contact avec le support de catalyseur (1).

2. Procédé de production d'un matériau de maintien (3) pour un convertisseur catalytique disposé dans un intervalle entre un support de catalyseur (1) et un boîtier métallique (2) recevant le support de catalyseur (1), ledit procédé comprenant les étapes de :
préparer une première suspension incluant une fibre d'alumine et un premier liant organique ;
préparer une seconde suspension contenant une fibre de mullite et un second liant organique ;
mouler la première suspension par déshydratation par aspiration ;
sécher la première suspension pour obtenir un matelas de fibre d'alumine (3A) après le moulage de la première suspension ;
appliquer la seconde suspension sur une surface du matelas de fibre d'alumine (3A) après le séchage de la première suspension ;
mouler la seconde suspension par déshydratation par aspiration pour obtenir un stratifié du matelas de fibre d'alumine (3A) et d'un matelas de fibre de mullite (3B) ;
sécher le stratifié.
